# EUROPEAN PATENT SPECIFICATION

(11) **EP 3 016 443 B1**
(45) Date of publication and mention of the grant of the patent: **06.12.2017**
(21) Application number: 15183683.0
(22) Date of filing: 03.09.2015
(51) Int. Cl.: H04W 8/24, H04W 48/18

(54) **COMMUNICATION METHOD AND TERMINAL**
KOMMUNIKATIONSVERFAHREN UND ENDGERÄT
PROCÉDÉ ET TERMINAL DE COMMUNICATION

(30) Priority: 29.10.2014 CN 201410594883
(43) Date of publication of application: 04.05.2016
(73) Proprietor: Xiaomi Inc., Beijing 100085 (CN)
(72) Inventor: REN, Qiao, Beijing 100085 (CN); GAO, Ziguang, Beijing 100085 (CN); ZHAO, Ming, Beijing 100085 (CN); FU, Qiang, Beijing 100085 (CN)
(74) Representative: Delumeau, François Guy

(56) References cited:
- EP-A1- 2 672 761
- WO-A1-2014/142966
- US-A1- 2012 020 298
- US-A1- 2014 068 027
- US-A1- 2014 219 272

## Description

### TECHNICAL FIELD

The present disclosure relates to the field of communication, and more particularly, to a communication method and a terminal.

### BACKGROUND

With the development of communication technologies, dual-frequency wireless routers will become the mainstream of wireless devices in the future. The dual-frequency wireless router is a wireless router that works at 2.4GHz and 5.0GHz frequency bands at the same time. Compared with a single-frequency wireless router, the dual-frequency wireless router has a higher wireless transmission speed, a better anti-interference performance, a stronger wireless signals, and a higher stability, and the dual-frequency wireless router is not prone to drop. Thus, the dual-frequency wireless router has become the mainstream developing trend of wireless products.

Since there is a big difference in cost between a WIFI chip supporting 2.4GHz and a WIFI chip supporting 5.0GHz, not every terminal is equipped with double WIFI chips at present. Because the communication quality of a 5.0GHz network is better than the communication quality of a 2.4GHz network, the terminal equipped with double chips will be connected to the 5.0GHz network by default under the circumstance of the dual-frequency wireless router.

The related art has at least the following technical problem:

if a terminal A is equipped with double WIFI chips, then the terminal A runs in the 5.0GHz network; if a terminal B is equipped with a single 2.4GHz chip, then the terminal B runs in the 2.4GHz network; because the terminal A and the terminal B are in the networks having different frequency bands, the terminal A and the terminal B cannot communicate with each other.

Document US 2012/020298 discloses an apparatus and method for selecting a WPAN based adaptive RF interface. Document EP 2 672 761 discloses methods and apparatus for use in facilitating communication for different types of wireless networks. Document WO 2014/142966 discloses a multiband operation of a single Wi-Fi radio. Document US 2014/068027 discloses a method for connecting directly to a controlled device using a mobile application.

### SUMMARY

The object of the invention is achieved by the subject-matter of the independent claims. Advantageous embodiments are defined in the dependent claims. Further examples are provided for facilitating the understanding of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a communication method, according to an exemplary embodiment.
Fig. 2 is a flow chart showing another communication method, according to an exemplary embodiment.
Fig. 3 is a block diagram illustrating a terminal, according to an exemplary embodiment.
Fig. 4 is a block diagram illustrating another terminal, according to an exemplary embodiment.
Fig. 5 is a block diagram illustrating a device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

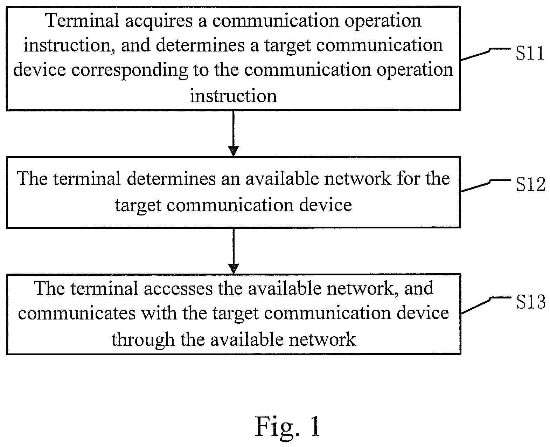

Fig. 1 is a flow chart showing a communication method, according to an exemplary embodiment. As shown in Fig. 1, the communication method provided by the embodiment may be implemented by a terminal, and includes the following steps.

In step S11, the terminal acquires a communication operation instruction, and determines a target communication device corresponding to the communication operation instruction.

During step S11, the terminal may determine the target communication device. In the embodiment, the terminal may be a portable terminal such as a smartphone, or a tablet computer, which may be carried by the user and used for controlling other devices. The target communication device may be a smart device such as a smart camera, a smart refrigerator, or a smart water heater, which may receive control signaling sent by the terminal so as to perform a corresponding operation.

In step S12, the terminal determines an available network for the target communication device.

With the popularization of dual-frequency wireless routers, the terminal and the target communication device are more likely connected to different networks. During step S12, the terminal may determine the available network for the target communication device, so as it is convenient for the terminal to access the available network and communicate with the target communication device.

For example, a dual-frequency router provides two APs (Access Point), wherein one AP provides a 2.4GHz network and the other AP provides a 5.0GHz network. If the terminal is equipped with double WIFI chips, then the terminal is generally connected to the 5.0GHz network. If the device is only equipped with a single WIFI chip that supports 2.4GHz, then the terminal can be connected to the 2.4GHz network only.

In step S13, the terminal accesses the available network, and communicates with the target communication device through the available network.

In step S13, when the terminal and the target communication device are connected to the same network, then the terminal does not need to switch the network. When the terminal and the target communication device are in different networks, the terminal needs to disconnect the currently connected network and access the network where the target communication device is located, so as to realize the communication between the terminal and the target communication device.

In the example of the dual-frequency wireless router illustrated in step S12, if the terminal is connected to the 5.0GHz network, and the target communication device is connected to the 2.4GHz network, when adopting the method provided in steps S11-S13, the terminal may be disconnected from the 5.0GHz network and connected to the 2.4GHz network, and may communicates with the target communication device through the 2.4GHz network.

By adopting the communication method provided by the embodiment, when it is detected that the terminal and the target communication device are in different networks, the terminal may automatically switch to the network where the target communication device is located, so as to realize the communications between the terminal and the target communication device.

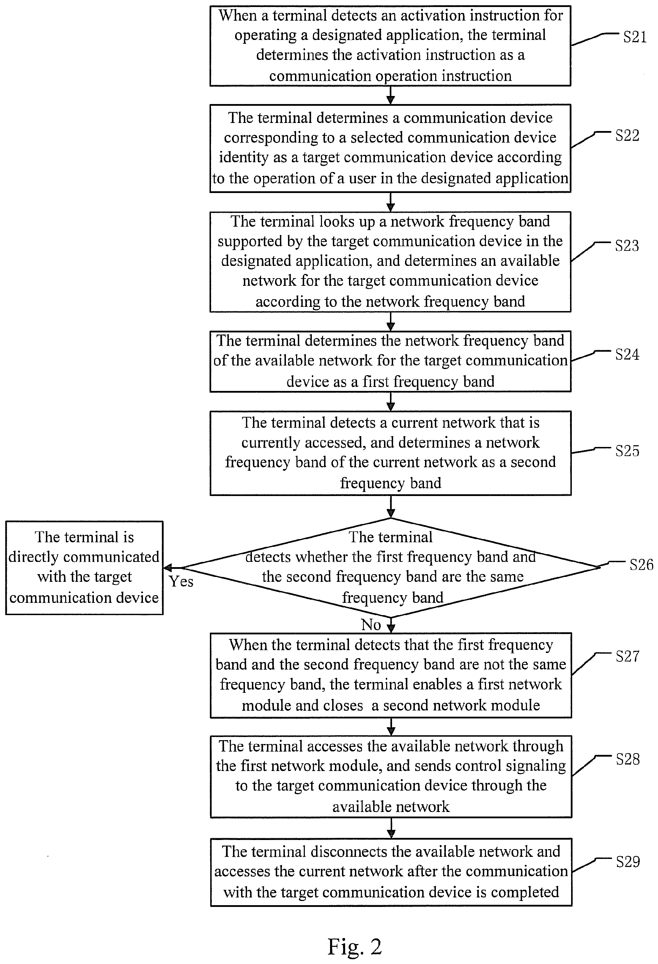

Based on the embodiment as shown in Fig. 1, the present disclosure also provides another embodiment as shown in Fig. 2, including the following steps.

In step S21, when a terminal detects an activation instruction for operating a designated application, the terminal determines the activation instruction as the communication operation instruction.

In step S22, the terminal determines a communication device corresponding to a selected communication device identity as the target communication device according to an operation of a user in the designated application.

It should be noted that steps S21 and S22 are possible detailed implementations of step S11 in Fig. 1. In steps S21 and S22, the communication operation instruction in step S11 is the activation instruction for operating the designated application, the designated application being stored with at least one communication device identity and network frequency bands supported by each communication device corresponding to each communication device identity. According to an example, the designated application is installed on the terminal, and the designated application may be a control application. For example, a plurality of devices is bound with the current terminal through the designated application, and then the terminal may control the plurality of devices through the designated application.

In step S23, the terminal looks up a network frequency band supported by the target communication device in the designated application, and determines the available network for the target communication device according to the network frequency band.

In the embodiment, since the designated application is stored with the network frequency bands supported by each communication device corresponding to each communication device identity, the terminal may determine the available network for the target communication device on the basis of the network frequency bands supported by the target communication device in step S23. Taking a family scene as an example, the user configures a SSID (Service Set Identifier) as a "family" dual-frequency wireless router in the house, and the WIFI frequency bands supported by the dual-frequency wireless router are 2.4GHz and 5.0GHz; if the terminal looks up in the designated application that the network frequency band supported by the target communication device is 2.4GHz, then the available network for the target communication device may be determined as the 2.4GHz network created by the current dual-frequency wireless router.

In step S24, the terminal determines the network frequency band of the available network for the target communication device as a first frequency band.

In step S25, the terminal detects the current network that is currently accessed, and determines a network frequency band of the current network as a second frequency band.

In the embodiment, the first frequency band is 2.4GHz, and the second frequency band is 5.0GHz.

In step S26, the terminal detects whether the first frequency band and the second frequency band are the same frequency band.

In step S27, when the terminal detects that the first frequency band and the second frequency band are not the same frequency band, the terminal enables a first network module and closes a second network module, the first network module being used for accessing a network of the first frequency band, and the second network module being used for accessing a network of the second frequency band.

In step S28, the terminal accesses the available network through the first network module, and sends control signaling to the target communication device through the available network, so that the target communication device performs a corresponding operation according to the control signaling.

In the embodiment, the terminal is equipped with double WIFI chips, which may support the 2.4GHz network and the 5.0GHz network at the same time. The target communication device is only equipped with a 2.4GHz WIFI chip and only supports the 2.4GHz network.

It should be emphasized that when the terminal is equipped with double WIFI chips, the terminal will be connected to the 5.0GHz network by default since the 5.0GHz network is better than the 2.4GHz network. In such a case, when the terminal detects that the target communication device supports 2.4GHz, the terminal may close the 5.0GHz WIFI chip and enables the 2.4GHz WIFI chip to be connected to the 2.4GHz network, so as to realize the communication with the target communication device.

It should be explained that since the cost of the 5.0GHz WIFI chip is higher than the cost of the 2.4GHz WIFI chip, most of the immovable devices or devices having poor portability will only be equipped with the 2.4GHz WIFI chip. However, the terminals having a high portability such as a mobile phone and a tablet computer have higher requirements for the network, and will generally be equipped with double WIFI chips. Under such a scene, the communication between the terminal and the device can be effectively realized by adopting the communication method as shown in Fig. 2.

In step S29, the terminal disconnects the available network and accesses the current network after the communication with the target communication device is completed.

Based on the foregoing scene, when the terminal switches from the 5.0GHz network to the 2.4GHz network and finishes the communication with the target communication device, the terminal will be automatically disconnected from the 2.4GHz network and connected to the 5.0GHz network. Since the 2.4GHz is a public frequency channel, after finishing the communication, the terminal is connected to the 5GHz frequency band by adopting such a method, thus keeping away from the 2.4GHz public frequency band which is crowded, avoiding conflict with other wireless devices, ensuring the stability of the wireless network, preventing dropping phenomenon from happening, and improving the speed of the wireless network.

Optionally, on the basis of partial contents in Fig. 1 and Fig. 2, the embodiment also provides an optional solution for realizing step S13 in Fig. 1, which specially includes the following steps.

In step S1, the terminal detects whether the current network that is currently accessed and the available network are the same network.

In step S2, when detecting that the current network and the available network are not the same network, the terminal disconnects the current network and accesses the available network.

In step S3, the terminal sends control signaling to the target communication device through the available network, so that the target communication device performs a corresponding operation according to the control signaling.

It should be explained that contrary to the step of determining the available network for the target communication device through the frequency band in Fig. 2, in the foregoing steps S1-S3, the available network for the target communication device may be determined according to network names. For example, the terminal has an authority of being connected to network 1 and network 2, and the target communication device is connected to the network 2 for a long term. Then, after the terminal and the target communication device are communicated for the first time, the terminal may record an identity of the target communication device and a SSID of the network (network 2) connected by the target communication device. In this way, when needing to be communicated with the target communication device next time, the terminal may automatically switch from network 1 to network 2 to realize the communication with the target communication device. The entire network switching process does not need the participation of the user, so that the terminal can be effectively and conveniently communicated with the target communication device.

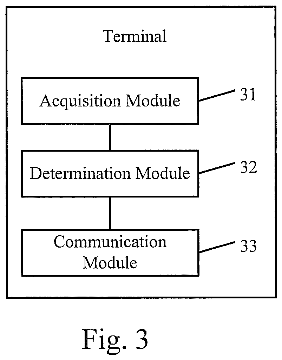

Fig. 3 is a block diagram illustrating a terminal, according to an exemplary embodiment. Referring to Fig. 3, the terminal includes an acquisition module 31, a determination module 32 and a communication module 33.

The acquisition module 31 is configured to acquire a communication operation instruction, and determine a target communication device corresponding to the communication operation instruction.

The determination module 32 is configured to determine an available network for the target communication device determined by the acquisition module 31.

The communication module 33 is configured to access the available network determined by the determination module 32, and communicate with the target communication device through the available network.

Optionally, the communication operation instruction acquired by the acquisition module 31 is an activation instruction for operating a designated application, the designated application being stored with at least one communication device identity.

The acquisition module 31 is configured to, when detecting the activation instruction for operating the designated application, determine the activation instruction as the communication operation instruction; and determine a communication device corresponding to the selected communication device identity as the target communication device according to the operation of a user in the designated application.

Optionally, the determination module 32 is configured to look up a network frequency band supported by the target communication device in the designated application, and determine the available network for the target communication device according to the network frequency band.

The designated application is stored with network frequency bands supported by each communication device corresponding to each communication device identity.

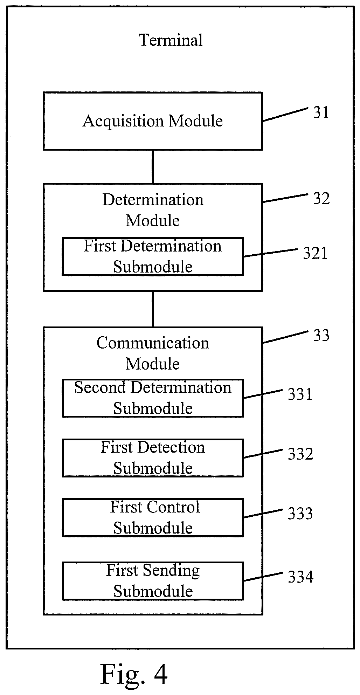

Optionally, as shown in Fig. 4, the determination module 32 includes:
a first determination submodule 321 configured to determine the network frequency band of the available network as a first frequency band.

The communication module 33 includes:
a second determination submodule 331 configured to detect the current network that is currently accessed, and determine a network frequency band of the current network as a second frequency band;
a first detection submodule 332 configured to detect whether the first frequency band determined by the first determination submodule 321 and the second frequency band determined by the second determination submodule 331 are the same frequency band;
a first control submodule 333 configured to, when the detection submodule 332 determines that the first frequency band and the second frequency band are not the same frequency band, enable a first network module and close a second network module, the first network module being used for accessing a network of the first frequency band, and the second network module being used for accessing a network of the second frequency band; and
a first sending submodule 334 configured to access the available network through the first network module, and send control signaling to the target communication device through the available network, so that the target communication device performs a corresponding operation according to the control signaling.

Optionally, the first frequency band determined by the first determination submodule 321 is 5.0GHz.

The second frequency band determined by the second determination submodule 331 is 2.4GHz

The target communication device is a device that only supports 2.4GHz.

Optionally, the designated application is also stored with network identities of networks connected by each communication device corresponding to each communication device identity.

The communication module 33 includes:
a second detection submodule configured to detect whether the current network that is currently accessed and the available network are the same network according to the network identities;
a second control submodule configured to, when the second detection submodule detects that the current network and the available network are not the same network, disconnect the current network and access the available network; and
a second sending submodule configured to send control signaling to the target communication device through the available network, so that the target communication device performs a corresponding operation according to the control signaling.

Optionally, the first control submodule or the second control submodule is also configured to disconnect the available network and access the current network after the communication with the target communication device is completed.

With respect to the devices in the above embodiments, the specific manners for performing operations for individual modules therein have been described in detail in the embodiments regarding the methods, which will not be elaborated herein.

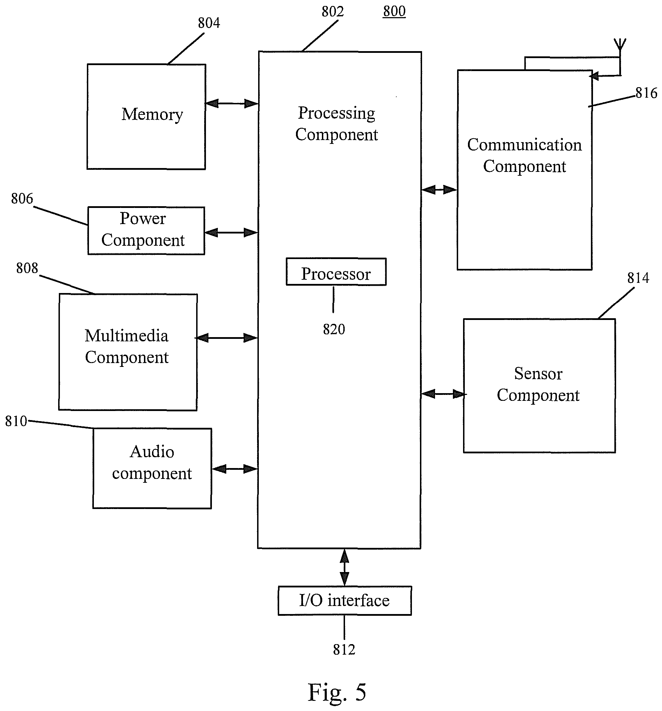

Fig. 5 is a block diagram illustrating a device 800 for realizing the communication method provided by the present disclosure, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A communication method, implemented by a terminal, the method comprising:
acquiring (S11) a communication operation instruction, and determining a target communication device corresponding to the communication operation instruction;
determining (S12) an available network for the target communication device; and
accessing (S13) the available network, and communicating with the target communication device through the available network,
wherein:
the communication operation instruction is an activation instruction for operating a designated application, the designated application being stored with at least one communication device identity;
the step (S11) of acquiring the communication operation instruction, and determining the target communication device corresponding to the communication operation instruction comprises:
when detecting the activation instruction for operating the designated application, determining (S21) the activation instruction as the communication operation instruction; and
determining (S22) a communication device corresponding to a selected communication device identity as the target communication device according to an operation of a user in the designated application; and
the designated application is a control application, the terminal sending control signaling to the target communication device through the available network, so that the target communication device performs a corresponding operation according to the control signaling;
**characterized in that** the designated application is further stored with network frequency bands supported by each communication device corresponding to each communication device identity; and
the step (S12) of determining the available network for the target communication device comprises:
looking up (S23) a network frequency band supported by the target communication device in the designated application, and determining the available network for the target communication device according to the network frequency band.

2. The method according to claim 1, **characterized in that** the step (S12) of determining the available network for the target communication device comprises:
determining (S24) the network frequency band of the available network as a first frequency band; and
the step (S13) of accessing the available network, and communicating with the target communication device through the available network comprises:
detecting (S25) a current network that is currently accessed by the terminal, and determining a network frequency band of the current network as a second frequency band; and
detecting (S26) whether the first frequency band and the second frequency band are the same frequency band;
when the first frequency band and the second frequency band are not the same frequency band, enabling (S27) a first network module, and closing a second network module, wherein the first network module is used for accessing a network of the first frequency band, and the second network module is used for accessing a network of the second frequency band; and
accessing (S28) the available network through the first network module, and sending control signaling to the target communication device through the available network, so that the target communication device performs a corresponding operation according to the control signaling.

3. The method according to claim 2, **characterized in that** the first frequency band is 2.4GHz, and the second frequency band is 5.0GHz; and
the target communication device is a device that only supports 2.4GHz.

4. The method according to claim 2, **characterized in that** after sending (S28) the control signaling to the target communication device through the available network, the method further comprises:
disconnecting the available network and accessing the current network after the communication with the target communication device is completed.

5. A terminal, comprising:
an acquisition module (31) configured to acquire a communication operation instruction, and determine a target communication device corresponding to the communication operation instruction;
a determination module (32) configured to determine an available network for the target communication device determined by the acquisition module (31); and
a communication module (33) configured to access the available network determined by the determination module (32), and communicate with the target communication device through the available network,
wherein:
the communication operation instruction acquired by the acquisition module (31) is an activation instruction for operating a designated application, the designated application being stored with at least one communication device identity; and
the acquisition module (31) is configured to, when detecting the activation instruction for operating the designated application, determine the activation instruction as the communication operation instruction; and determine a communication device corresponding to the selected communication device identity as the target communication device according to the operation of a user in the designated application.
**characterized in that**:
the designated application is a control application, the terminal sending control signaling to the target communication device through the available network, so that the target communication device performs a corresponding operation according to the control signaling;
the determination module (32) is configured to look up a network frequency band supported by the target communication device in the designated application, and determine the available network for the target communication device according to the network frequency band;
wherein the designated application is stored with network frequency bands supported by each communication device corresponding to each communication device identity.

6. The terminal according to claim 5, **characterized in that** the determination module (32) comprises:
a first determination submodule (321) configured to determine the network frequency band of the available network as a first frequency band; and
the communication module (33) comprises:
a second determination submodule (331) configured to detect a current network that is currently accessed by the terminal, and determine a network frequency band of the current network as a second frequency band;
a first detection submodule (332) configured to detect whether the first frequency band determined by the first determination submodule (321) and the second frequency band determined by the second determination submodule (331) are the same frequency band;
a first control submodule (333) configured to, when the detection submodule (332) determines that the first frequency band and the second frequency band are not the same frequency band, enable a first network module and close a second network module, the first network module being used for accessing a network of the first frequency band, and the second network module being used for accessing a network of the second frequency band; and
a first sending submodule (334) configured to access the available network through the first network module, and send control signaling to the target communication device through the available network, so that the target communication device performs a corresponding operation according to the control signaling.

7. The terminal according to claim 6, **characterized in that**:
the first control submodule (333) or the second control submodule is further configured to disconnect the available network and access the current network after the communication with the target communication device is completed.

8. A computer program, including instructions for executing the steps of a communication method according to any one of claims 1 to 4 when said program is executed by a computer.

9. A recording medium readable by a computer and having recorded thereon a computer program including instructions for executing the steps of a communication method according to any one of claims 1 to 4.

## Patentansprüche

1. Kommunikationsverfahren, das von einem Endgerät implementiert wird, wobei das Verfahren umfasst:
Erfassen (S11) einer Kommunikationsoperationsanweisung und Bestimmen eines Zielkommunikationsgeräts, das der Kommunikationsoperationsanweisung entspricht,
Bestimmen (S12) eines verfügbaren Netzwerks für das Zielkommunikationsgerät, und
Zugreifen (S13) auf das verfügbare Netzwerk und Kommunizieren mit dem Zielkommunikationsgerät durch das verfügbare Netzwerk,
wobei:
die Kommunikationsoperationsanweisung eine Aktivierungsanweisung zum Betreiben einer designierten Anwendung ist, wobei die designierte Anwendung mit mindestens einer Kommunikationsgerätekennung gespeichert ist,
der Schritt (S11) des Erfassens einer Kommunikationsoperationsanweisung und Bestimmens des Zielkommunikationsgeräts, das der Kommunikationsoperationsanweisung entspricht, umfasst:
beim Detektieren der Aktivierungsanweisung zum Betreiben der designierten Anwendung, Bestimmen (S21) der Aktivierungsanweisung als die Kommunikationsoperationsanweisung, und
Bestimmen (S22) eines Kommunikationsgeräts, das einer ausgewählten Kommunikationsgerätekennung entspricht, als das Zielkommunikationsgerät gemäß einer Operation eines Benutzers in der designierten Anwendung, und
wobei die designierte Anwendung eine Steueranwendung ist, das Endgerät Steuersignalisierung durch das verfügbare Netzwerk an das Zielkommunikationsgerät sendet, so dass das Zielkommunikationsgerät eine entsprechende Operation gemäß der Steuersignalisierung durchführt,
**dadurch gekennzeichnet, dass** die designierte Anwendung ferner mit Netzfrequenzbändern gespeichert ist, die von jedem Kommunikationsgerät unterstützt werden und jeder Kommunikationsgerätekennung entsprechen, und
der Schritt (S12) des Bestimmens des verfügbaren Netzwerks für das Zielkommunikationsgerät umfasst:
Suchen (S23) nach einem Netzfrequenzband, das vom Zielkommunikationsgerät in der designierten Anwendung unterstützt wird, und Bestimmen des verfügbaren Netzwerks für das Zielkommunikationsnetzwerks gemäß dem Netzfrequenzband.

2. Verfahren nach Anspruch 1, **dadurch gekennzeichnet, dass** der Schritt (S12) des Bestimmens des verfügbaren Netzwerks für das Zielkommunikationsgerät umfasst:
Bestimmen (S24) des Netzfrequenzbandes des verfügbaren Netzwerks als ein erstes Frequenzband, und
der Schritt (S13) des Zugreifens auf das verfügbare Netzwerk und Kommunizierens mit dem Zielkommunikationsgerät durch das verfügbare Netzwerk umfasst:
Detektieren (S25) eines aktuellen Netzwerks, auf welches das Endgerät gegenwärtig zugreift, und Bestimmen eines Netzfrequenzbandes des aktuellen Netzwerks als ein zweites Frequenzband, und
Detektieren (S26), ob das erste Frequenzband und das zweite Frequenzband das gleiche Frequenzband sind,
Aktivieren (S27), wenn das erste Frequenzband und das zweite Frequenzband nicht das gleiche Frequenzband sind, eines ersten Netzwerkmoduls und Schließen eines zweiten Netzwerkmoduls, wobei das erste Netzwerkmodul zum Zugreifen auf ein Netzwerk des ersten Frequenzbandes verwendet wird, und das zweite Netzwerkmodul zum Zugreifen auf ein Netzwerk des zweiten Frequenzbandes verwendet wird, und
Zugreifen (S28) auf das verfügbare Netzwerk durch das erste Netzwerkmodul und Senden von Steuersignalisierung durch das verfügbare Netzwerk an das Zielkommunikationsgerät, so dass das Zielkommunikationsgerät eine entsprechende Operation gemäß der Steuersignalisierung durchführt.

3. Verfahren nach Anspruch 2, **dadurch gekennzeichnet, dass** das erste Frequenzband 2,4 GHz ist, und das zweite Frequenzband 5,0 GHz ist, und
das Zielkommunikationsgerät ein Gerät ist, das nur 2,4 GHz unterstützt.

4. Verfahren nach Anspruch 2, **dadurch gekennzeichnet, dass** Verfahren nach dem Senden (S28) der Steuersignalisierung durch das verfügbare Netzwerk an das Zielkommunikationsgerät ferner umfasst:
Trennen des verfügbaren Netzwerks und Zugreifen auf das aktuelle Netzwerk nach Abschluss der Kommunikation mit dem Zielkommunikationsgerät.

5. Endgerät, umfassend:
ein Erfassungsmodul (31), das so konfiguriert ist, dass es eine Kommunikationsoperationsanweisung erfasst und ein Zielkommunikationsgerät bestimmt, das der Kommunikationsoperationsanweisung entspricht,
ein Bestimmungsmodul (32), das so konfiguriert ist, dass es ein verfügbares Netzwerk für das durch das Erfassungsmodul (31) bestimmte Zielkommunikationsgerät bestimmt, und
ein Kommunikationsmodul (33), das so konfiguriert ist, dass es auf das durch das Bestimmungsmodul (32) bestimmte verfügbare Netzwerk zugreift und durch das verfügbare Netzwerk mit dem Zielkommunikationsgerät kommuniziert,
wobei:
die durch das Erfassungsmodul (31) erfasste Kommunikationsoperationsanweisung eine Aktivierungsanweisung zum Betreiben einer designierten Anwendung ist, wobei die designierte Anwendung mit mindestens einer Kommunikationsgerätekennung gespeichert ist,
das Erfassungsmodul (31) so konfiguriert ist, dass es bei Detektieren der Aktivierungsanweisung zum Betreiben der designierten Anwendung die Aktivierungsanweisung als die Kommunikationsoperationsanweisung bestimmt und ein Kommunikationsgerät, das der ausgewählten Kommunikationsgerätekennung entspricht, als das Zielkommunikationsgerät gemäß der Operation eines Benutzers in der designierten Anwendung bestimmt,
**dadurch gekennzeichnet, dass**:
dass die designierte Anwendung eine Steueranwendung ist, das Endgerät Steuersignalisierung durch das verfügbare Netzwerk an das Zielkommunikationsgerät sendet, so dass das Zielkommunikationsgerät eine entsprechende Operation gemäß der Steuersignalisierung durchführt,
das Bestimmungsmodul (32) so konfiguriert ist, dass es nach einem Netzfrequenzband sucht, das vom Zielkommunikationsgerät in der designierten Anwendung unterstützt wird, und das verfügbare Netzwerk für das Zielkommunikationsnetzwerks gemäß dem Netzfrequenzband bestimmt,
wobei die designierte Anwendung ferner mit Netzfrequenzbändern gespeichert ist, die von jedem Kommunikationsgerät unterstützt werden und jeder Kommunikationsgerätekennung entsprechen.

6. Endgerät nach Anspruch 5, **dadurch gekennzeichnet, dass** das Bestimmungsmodul (32) umfasst:
ein erstes Bestimmungs-Submodul (321), das so konfiguriert ist, dass es das Netzfrequenzband des verfügbaren Netzwerks als ein erstes Frequenzband bestimmt, und
das Kommunikationsmodul (33) ferner umfasst:
ein zweites Bestimmungs-Submodul (331), das so konfiguriert ist, dass es ein aktuelles Netzwerk detektiert, auf welches das Endgerät gegenwärtig zugreift, und ein Netzfrequenzband des aktuellen Netzwerks als ein zweites Frequenzband bestimmt,
ein erstes Detektions-Submodul (332), das so konfiguriert ist, dass es detektiert, ob das durch das erste Bestimmungs-Submodul (321) bestimmte erste Frequenzband und das durch das zweite Bestimmungs-Submodul (331) bestimmte zweite Frequenzband das gleiche Frequenzband sind,
ein erstes Steuer-Submodul (333), dass so konfiguriert ist, dass es, wenn das Detektions-Submodul (332) bestimmt, dass das erste Frequenzband und das zweite Frequenzband nicht das gleiche Frequenzband sind, ein erstes Netzwerkmodul aktiviert und ein zweites Netzwerkmodul schließt, wobei das erste Netzwerkmodul zum Zugreifen auf ein Netzwerk des ersten Frequenzbandes verwendet wird, und das zweite Netzwerkmodul zum Zugreifen auf ein Netzwerk des zweiten Frequenzbandes verwendet wird, und
ein erstes Sende-Submodul (334), das so konfiguriert ist, dass es auf das verfügbare Netzwerk durch das erste Netzwerkmodul zugreift und Steuersignalisierung durch das verfügbare Netzwerk an das Zielkommunikationsgerät sendet, so dass das Zielkommunikationsgerät eine entsprechende Operation gemäß der Steuersignalisierung durchführt.

7. Endgerät nach Anspruch 6, **dadurch gekennzeichnet, dass**:
das erste Steuer-Submodul (333) oder das zweite Steuer-Submodul ferner so konfiguriert ist, dass es das verfügbare Netzwerk trennt und nach Abschluss der Kommunikation mit dem Zielkommunikationsgerät auf das aktuelle Netzwerk zugreift.

8. Computerprogramm, umfassend Anweisungen zum Ausführen der Schritte eines Kommunikationsverfahrens nach einem der Ansprüche 1 bis 4, wenn das Programm von einem Computer ausgeführt wird.

9. Aufzeichnungsmedium, das von einem Computer gelesen werden kann und ein Computerprogramm darauf aufgezeichnet aufweist, das Anweisungen zum Ausführen der Schritte eines Kommunikationsverfahrens nach einem der Ansprüche 1 bis 4 umfasst.

## Revendications

1. Procédé de communication, mis en oeuvre par un terminal, le procédé comprenant :
l'acquisition (S11) d'une instruction d'opération de communication, et la détermination d'un dispositif de communication cible correspondant à l'instruction d'opération de communication ;
la détermination (S12) d'un réseau disponible pour le dispositif de communication cible ; et
l'accès (S13) au réseau disponible, et la communication avec le dispositif de communication cible par l'intermédiaire du réseau disponible,
dans lequel :
l'instruction d'opération de communication est une instruction d'activation pour faire fonctionner une application désignée, l'application désignée étant stockée avec au moins une identité de dispositif de communication ;
l'étape (S11) d'acquisition de l'instruction d'opération de communication, et de détermination du dispositif de communication cible correspondant à l'instruction d'opération de communication comprend :
lors de la détection de l'instruction d'activation pour faire fonctionner l'application désignée, la détermination (S21) de l'instruction d'activation comme l'instruction d'opération de communication ; et
la détermination (S22) d'un dispositif de communication correspondant à une identité de dispositif de communication sélectionnée comme le dispositif de communication cible en fonction d'une opération d'un utilisateur dans l'application désignée ; et
l'application désignée est une application de commande, le terminal envoyant une signalisation de commande au dispositif de communication cible par l'intermédiaire du réseau disponible, de sorte que le dispositif de communication cible effectue une opération correspondante en fonction de la signalisation de commande ;
**caractérisé en ce que** l'application désignée est en outre stockée avec des bandes de fréquences de réseau supportées par chaque dispositif de communication correspondant à chaque identité de dispositif de communication ; et
l'étape (S12) de détermination du réseau disponible pour le dispositif de communication cible comprend :
la recherche (S23) d'une bande de fréquences de réseau supportée par le dispositif de communication cible dans l'application désignée, et la détermination du réseau disponible pour le dispositif de communication cible en fonction de la bande de fréquences de réseau.

2. Procédé selon la revendication 1, **caractérisé en ce que** l'étape (S12) de détermination du réseau disponible pour le dispositif de communication cible comprend :
la détermination (S24) de la bande de fréquences de réseau du réseau disponible comme une première bande de fréquences ; et
l'étape (S13) d'accès au réseau disponible, et de communication avec le dispositif de communication cible par l'intermédiaire du réseau disponible comprend :
la détection (S25) d'un réseau actuel auquel le terminal accède actuellement, et la détermination d'une bande de fréquences de réseau du réseau actuel comme une seconde bande de fréquences ; et
la détection (S26) de si la première bande de fréquences et la seconde bande de fréquences sont la même bande de fréquences ;
lorsque la première bande de fréquences et la seconde bande de fréquences ne sont pas la même bande de fréquences, l'activation (S27) d'un premier module de réseau, et la fermeture d'un second module de réseau, dans lequel le premier module de réseau est utilisé pour accéder à un réseau de la première bande de fréquences, et le second module de réseau est utilisé pour accéder à un réseau de la seconde bande de fréquences ; et
l'accès (S28) au réseau disponible par l'intermédiaire du premier module de réseau, et l'envoi d'une signalisation de commande au dispositif de communication cible par l'intermédiaire du réseau disponible, de sorte que le dispositif de communication cible effectue une opération correspondante en fonction de la signalisation de commande.

3. Procédé selon la revendication 2, **caractérisé en ce que** la première bande de fréquences est de 2,4 GHz, et la seconde bande de fréquences est de 5,0 GHz ; et
le dispositif de communication cible est un dispositif qui ne supporte que 2,4 GHz.

4. Procédé selon la revendication 2, **caractérisé en ce qu'**après l'envoi (S28) de la signalisation de commande au dispositif de communication cible par l'intermédiaire du réseau disponible, le procédé comprend en outre :
la déconnexion du réseau disponible et l'accès au réseau actuel après que la communication avec le dispositif de communication cible est terminée.

5. Terminal, comprenant :
un module d'acquisition (31) configuré pour acquérir une instruction d'opération de communication, et déterminer un dispositif de communication cible correspondant à l'instruction d'opération de communication ;
un module de détermination (32) configuré pour déterminer un réseau disponible pour le dispositif de communication cible déterminé par le module d'acquisition (31) ; et
un module de communication (33) configuré pour accéder au réseau disponible déterminé par le module de détermination (32), et communiquer avec le dispositif de communication cible par l'intermédiaire du réseau disponible,
dans lequel :
l'instruction d'opération de communication acquise par le module d'acquisition (31) est une instruction d'activation pour faire fonctionner une application désignée, l'application désignée étant stockée avec au moins une identité de dispositif de communication ; et
le module d'acquisition (31) est configuré pour, lors de la détection de l'instruction d'activation pour faire fonctionner l'application désignée, déterminer l'instruction d'activation comme l'instruction d'opération de communication ; et déterminer un dispositif de communication correspondant à l'identité de dispositif de communication sélectionnée comme le dispositif de communication cible en fonction de l'opération d'un utilisateur dans l'application désignée ;
**caractérisé en ce que** :
l'application désignée est une application de commande, le terminal envoyant une signalisation de commande au dispositif de communication cible par l'intermédiaire du réseau disponible, de sorte que le dispositif de communication cible effectue une opération correspondante en fonction de la signalisation de commande ;
le module de détermination (32) est configuré pour rechercher une bande de fréquences de réseau supportée par le dispositif de communication cible dans l'application désignée, et déterminer le réseau disponible pour le dispositif de communication cible en fonction de la bande de fréquences de réseau ;
dans lequel l'application désignée est stockée avec des bandes de fréquences de réseau supportées par chaque dispositif de communication correspondant à chaque identité de dispositif de communication.

6. Terminal selon la revendication 5, **caractérisé en ce que** le module de détermination (32) comprend :
un premier sous-module de détermination (321) configuré pour déterminer la bande de fréquences de réseau du réseau disponible comme une première bande de fréquences ; et
le module de communication (33) comprend :
un second sous-module de détermination (331) configuré pour détecter un réseau actuel auquel le terminal accède actuellement, et déterminer une bande de fréquences de réseau du réseau actuel comme une seconde bande de fréquences ;
un premier sous-module de détection (332) configuré pour détecter si la première bande de fréquences déterminée par le premier sous-module de détermination (321) et la seconde bande de fréquences déterminée par le second sous-module de détermination (331) sont la même bande de fréquences ;
un premier sous-module de commande (333) configuré pour, lorsque le sous-module de détection (332) détermine que la première bande de fréquences et la seconde bande de fréquences ne sont pas la même bande de fréquences, activer un premier module de réseau et fermer un second module de réseau, le premier module de réseau étant utilisé pour accéder à un réseau de la première bande de fréquences, et le second module de réseau étant utilisé pour accéder à un réseau de la seconde bande de fréquences ; et
un premier sous-module d'envoi (334) configuré pour accéder au réseau disponible par l'intermédiaire du premier module de réseau, et envoyer une signalisation de commande au dispositif de communication cible par l'intermédiaire du réseau disponible, de sorte que le dispositif de communication cible effectue une opération correspondante en fonction de la signalisation de commande.

7. Terminal selon la revendication 6, **caractérisé en ce que** :
le premier sous-module de commande (333) ou le second sous-module de commande est en outre configuré pour déconnecter le réseau disponible et accéder au réseau actuel après que la communication avec le dispositif de communication cible est terminée.

8. Programme d'ordinateur, comprenant des instructions pour exécuter les étapes d'un procédé de communication selon l'une quelconque des revendications 1 à 4 lorsque ledit programme est exécuté par un ordinateur.

9. Support d'enregistrement lisible par un ordinateur et sur lequel est enregistré un programme d'ordinateur comprenant des instructions pour exécuter les étapes d'un procédé de communication selon l'une quelconque des revendications 1 à 4.
